# FASCICULE DE BREVET EUROPEEN

(11) **EP 0 406 061 B1**
(45) Date de publication et mention de la délivrance du brevet: **11.08.1993**
(21) Numéro de dépôt: 90401713.4
(22) Date de dépôt: 19.06.1990
(51) Int. Cl.: G01P 5/00

(54) **Dispositif embarqué dans un engin mobile, pour l'obtention de signaux représentatifs de la vitesse relative de l'engin par rapport à un fluide , et appareil de mesure comportant un tel dispositif**
Mit einer bewegbaren Vorrichtung verbundener Apparat zur Erfassung von Signalen, die der Geschwindigkeit dieser Vorrichtung in einem Fluidum entsprechen sowie Messgerät mit einer solchen Vorrichtung
Apparatus attached to a moveable device to obtain signals representative of the speed of the device relative to a fluid, and measurement system incorporating such apparatus

(30) Priorité: 30.06.1989 FR 8908808
(43) Date de publication de la demande: 02.01.1991
(73) Titulaire: THOMSON-CSF, 75008 Paris (FR)
(72) Inventeur: Garcia, James, F-92045 Paris la Défense (FR); Beigbeder, Gérard, F-92045 Paris la Défense (FR)
(74) Mandataire: Courtellemont, Alain

(56) Documents cités:
- EP-A- 0 009 533
- EP-A- 0 286 720
- US-A- 4 195 931

## Description

Pour diriger certains engins mobiles tels que des avions ou certains missiles, voire des bateaux, la connaissance de leur vitesse relative par rapport au fluide ambiant est nécessaire. Dans ce qui suit il sera question d'avions, étant entendu que ce qui sera alors dit sera également valable, au type de fluide près, pour d'autres types d'engins qu'ils soient volants ou qu'ils se déplacent sur le sol, sur l'eau ou sous l'eau.

Il est connu, dans un avion, de déterminer cette vitesse relative à partir de signaux fournis par quatre sondes :
- une sonde de pression statique dont la surface sensible est disposée parallèlement aux filets d'écoulement de l'air, en un endroit où ne se produisent ni dépressions ni surpressions,
- une sonde de pression totale, dont la surface sensible est placée généralement à l'avant de l'avion, au moins sensiblement perpendiculairement à son axe longitudinal,
- deux sondes clinométriques, par exemple du type girouette, qui donnent respectivement l'angle d'incidence et l'angle de dérapage de l'avion. Il est rappelé que l'angle d'incidence est l'angle que fait le vecteur vitesse relative par rapport au vent avec la corde de l'aile de l'avion, c'est-à-dire avec la ligne qui rejoint le point le plus en avant et le point le plus en arrière de l'aile dans une coupe verticale parallèle au plan de symétrie de l'avion. La connaissance de l'angle d'incidence est vitale car elle permet de prévenir les risques de décrochage ; quant à l'angle de dérapage c'est l'angle que fait le vecteur vitesse relative par rapport au vent avec l'axe longitudinal de l'avion.

Ces quatre sondes qui forment autant de protubérances sur la paroi extérieure de l'avion présentent divers inconvénients. Elles posent des problèmes de résistance mécanique aux intempéries, de bon fonctionnement par tous temps et en particulier par temps givrant ; elles rendent l'avion plus facilement détectable par radar, ce qui est une gêne pour les avions militaires ; elles nécessitent, en fonction de l'angle d'incidence, des corrections des mesures effectuées par les sondes de pression ; elles créent des turbulences.

Il est également connu, par le document EP-A-9533, de réaliser des anémomètres laser à effet Doppler qui émettent un faisceau laser modulé par un oscillateur et qui comparent la modulation du signal réfléchi avec celle de l'oscillateur pour en déduire la vitesse des particules ayant causé la réflexion. Avec ce type d'anémomètre le volume de mesure est constitué par la portion du faisceau émis dans laquelle se trouvent les particules qui ont provoqué la réflexion ; il est donc impossible d'effectuer une mesure ponctuelle, c'est-à-dire dans un petit volume situé à une distance prédéterminée de l'anémomètre.

La présente invention a pour but d'éviter ou, pour le moins, de réduire ces inconvénients.

Ceci est obtenu en réalisant des dispositifs de mesure à l'aide d'anémomètres laser, à franges, tels qu'il en est utilisé, sur des supports fixes, clans des espaces clos, pour mesurer des écoulements d'air, en choisissant parmi ces anémomètres ceux les plus aptes à être embarqués et en adaptant ces anémomètres aux conditions particulières d'une mesure en espace libre.

Selon l'invention, un dispositif embarqué dans un engin mobile pour l'obtention de signaux représentatifs de la vitesse relative de l'engin par rapport à un fluide ambiant, est caractérisé en ce qu'il comporte n, où n est un entier positif, anémomètres à diode laser, à franges, en ce que chaque anémomètre comporte un filtre optique dont la bande passante est centrée sur la fréquence d'émission de la diode laser, en ce que ce filtre est disposé dans le trajet optique entre le volume de mesure de l'anémomètre considéré et son photodétecteur et en ce que les signaux sont fournis par les photodétecteurs des n anémomètres, pour au moins deux directions distinctes des n axes de mesure relatifs aux n anémomètres, dans le but de déterminer au moins deux composantes de la vitesse.

La présente invention sera mieux comprise et d'autres caractéristiques apparaîtront à l'aide de la description ci-après et des figures s'y rapportant, qui représentent :
- les figures 1 et 2, deux vues d'un anémomètre utilisable dans un dispositif selon l'invention,
- la figure 3, une vue du volume de mesure de l'anémomètre selon les figures 1 et 2,
- les figures 4 à 7, des vues relatives à trois dispositifs selon l'invention.

Sur les différentes figures les éléments correspondants sont désignés par les mêmes repères.

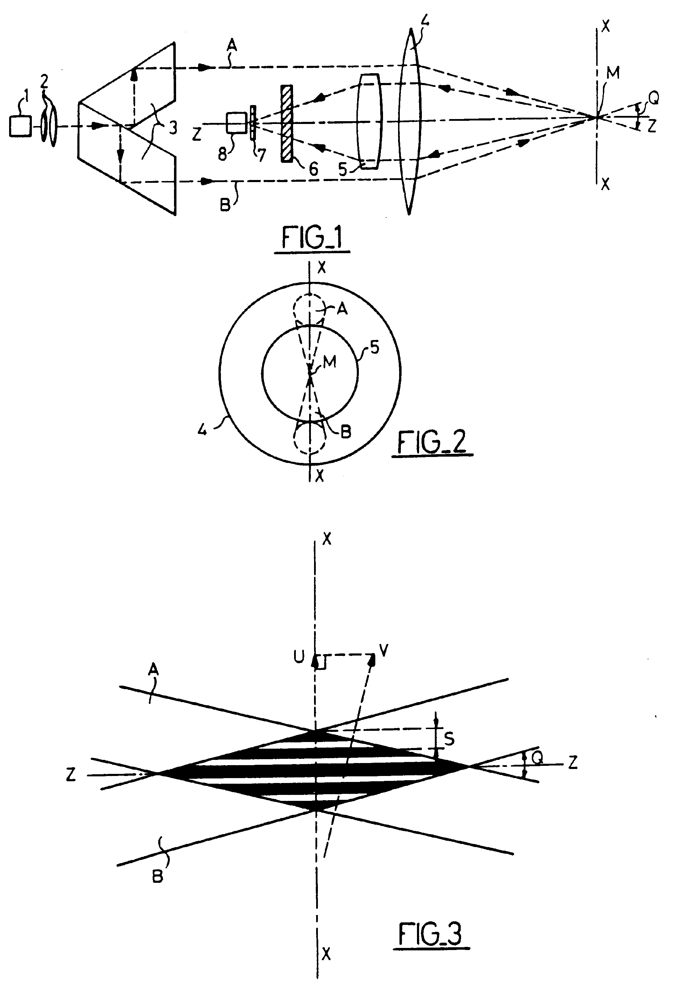

La figure 1 est une vue schématique d'un anémomètre à diode laser avec, en série sur le plan optique, une source émettrice constituée pour une diode laser de puissance, 1, une optique de collimation, 2, un séparateur de faisceaux optiques à miroirs semi-réfléchissants, 3, une optique d'émission, 4, une optique de réception, 5, un filtre interférentiel 6, un iris 7 et un photodétecteur 8. Cet anémomètre est décrit dans la demande de brevet français 2 637 085 du 28 juin 1989 ; il a été mis au point par l'Institut franco-allemand de recherches de Saint-Louis (France) ; pour son utilisation dans le cadre de l'invention il a été, en particulier, modifié par l'adjonction des éléments 6 et 7 dont le rôle va être expliqué ci-après.

Le fonctionnement de l'anémomètre selon la figure 1 est le suivant.

La diode laser 1 émet un rayonnement monochromatique. A partir de ce rayonnement l'optique de collimation 2 forme un faisceau lumineux qu'elle dirige sur l'entrée du séparateur de faisceaux 3. Le séparateur de faisceaux divise le faisceau entrant en deux faisceaux, A et B, qu'il envoie sur l'optique d'émission 4. Cette optique d'émission fait converger les deux faisceaux vers une zone M, appelée volume de mesure, où se produisent des franges d'interférence. Ces franges apparaissent sur la figure 3 qui est une vue schématique très agrandie, de ce volume de mesure, dans le plan vertical passant par la diode et sensiblement le milieu du volume M ; ce volume, qui varie en fonction des dimensions transversales données aux faisceaux A et B et en fonction de l'angle Q que font les faisceaux quand ils se croisent, fait de l'ordre de quelques centaines de microns de longueur et de l'ordre de quelques dizaines de microns d'épaisseur et de largeur. Les franges alternativement brillantes et sombres, qui se créent dans le volume M, sont parallèles au plan bissecteur des deux faisceaux. La distance s séparant le milieu de deux franges consécutives est égale à la longueur d'onde du rayonnement de la diode 1 divisée par deux fois le sinus de l'angle Q/2. Les particules de poussière entraînées par l'écoulement de l'air dans le volume M, diffusent une lumière dont l'intensité varie, du fait des franges, périodiquement à une fréquence, f, proportionnellement à leur vitesse V ou, plus précisément, en fonction linéaire de la composante U de leur vitesse V dans la direction XX perpendiculaire au plan des franges ; cette direction constitue ce qui est généralement appelé l'axe de mesure de l'anémomètre ; la relation qui lie U, f et s s'écrit :

U = f.s (au signe près)

Une partie de la lumière ainsi diffusée par les particules qui ont traversé le volume M traverse successivement l'optique d'émission 4 et l'optique de réception 5 pour converger vers le photodétecteur 8 en passant par le filtre interférentiel 6 et l'iris 7. Cette lumière, dont l'intensité lumineuse est modulée, produit une modulation du signal électrique de sortie du photodétecteur 8 si bien qu'une simple mesure de la fréquence de modulation de ce signal électrique permet de déterminer la composante U du vecteur vitesse.

Le filtre interférentiel 6 est un filtre optique à bande passante étroite centrée sur la fréquence de la raie d'émission de la diode 1 ; son rôle est de débarrasser le plus possible la lumière fournie au photodétecteur 8 de tout ce qui ne provient pas de la diode 1 et plus particulièrement de la lumière solaire ; sans le filtre 6 le photodétecteur 8 serait facilement saturé, ce qui rendrait toute mesure impossible.

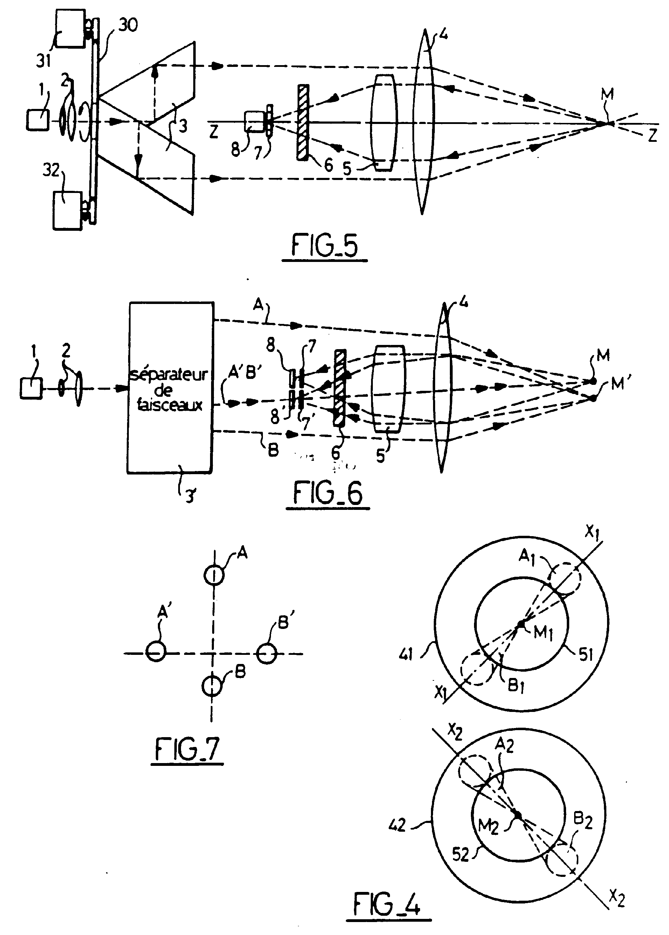

Il est à noter que les anémomètres à diode laser, des dispositifs selon l'invention, qui sont décrits à l'aide des figures 4 à 7, ont été réalisés avec une diode laser dont la raie était à 0,82 microns mais qu'une étude est en cours pour réaliser des diodes laser à 1,4 et 1,9 microns ; de telles diodes auront l'avantage d'avoir une raie d'émission située dans un trou du spectre solaire et donc de permettre, en association avec le filtre 6, que le photodétecteur 8 ne reçoive pratiquement pas de lumière solaire puisque la bande passante du filtre sera toute entière située dans ce trou. Il est également à noter que la bande passante du filtre 6 peut être choisie d'autant plus étroite que la fréquence de la raie d'émission de la diode 1 est plus stable ; ainsi une stabilisation en température de la diode 1 autorise l'emploi d'un filtre à bande très étroite, de ± 1 nanomètre, c'est-à-dire d'un filtre très efficace contre la lumière parasite.

L'iris 7 a pour rôle de débarrasser la lumière reçue par le photodétecteur 8 des rayonnements ne provenant pas du volume de mesure car trop décalés par rapport à l'axe optique ZZ de l'anémomètre.

La figure 2 représente l'anémomètre selon la figure 1, vu en bout, c'est-à-dire d'un point de l'axe optique ZZ situé au delà du volume de mesure M. Sur cette figure n'ont été représentés que l'axe de mesure XX, le volume de mesure M, les pourtours des optiques d'émission 4 et de réception 5 et les faisceaux lumineux A et B que l'optique d'émission 4 fait converger vers le volume de mesure M après qu'ils lui soient parvenus en passant de part et d'autre de l'optique de réception 5.

Il a été vu, lors de la description de la figure 3, que l'anémomètre selon les figures 1 et 2 permettait de déterminer la composante du vecteur vitesse relative selon l'axe XX. Pour le pilotage d'un avion 11 est nécessaire d'avoir la composante du vecteur vitesse relative dans le plan vertical passant par l'axe longitudinal de l'avion. Or, avec un avion, le vecteur vitesse relative est situé dans un cône connu a priori, donné par le constructeur de l'avion ; il est donc possible, avec deux anémomètres, dont les axes de mesure sont correctement disposés dans le plan longitudinal vertical de l'avion, de déterminer la composante du vecteur vitesse dans ce plan par les projections de ce vecteur sur ces deux axes ; cette disposition doit être telle que le vecteur vitesse soit toujours situé dans le même angle compris entre les deux axes de mesure, de manière qu'il n'y ait pas ambiguïté sur sa détermination étant donné que les projections sur les axes de mesure sont connues en amplitude mais pas en signe ; comme le débattement maximum du vecteur vitesse relative n'excède pas, en général, 90 degrés en conditions de vol, il est possible de disposer les deux axes de mesure à 45 degrés, de part et d'autre de l'axe longitudinal de l'avion, pour obtenir les projections recherchées.

La mesure du vecteur vitesse étant obtenue par une moyenne sur les valeurs données par l'anémomètre, il n'y a pas à déterminer les deux projections sus-mentionnées sur une même particule ; il est donc possible de dissocier les volumes de mesure des deux anémomètres en les laissant toutefois dans les mêmes filets d'air. Une telle réalisation est présentée sur la figure 4 ; cette figure montre deux anémomètres identiques à l'anémomètre selon les figures 1 et 2, dans une vue en bout comme celle de la figure 2 où les références relatives à ces deux anémomètres sont celles de la figure 2 suivies respectivement d'un 1 et d'un 2. Les deux anémomètres de la figure 4 sont disposés l'un au dessus de l'autre et sont tournés de -45° et +45° autour de leur axe longitudinal correspondant à l'axe ZZ de la figure 1 ; il est entendu que des valeurs différentes peuvent être choisie pour ces angles mais en tenant compte, comme il a été expliqué plus avant, du débattement maximum du vecteur vitesse relative.

Une autre possibilité de déterminer la vitesse relative est d'utiliser un seul anémomètre comme celui des figures 1 et 2 mais en faisant tourner ou osciller son séparateur de faisceaux, 3, autour de l'axe ZZ ; les valeurs maximum obtenues pour la vitesse relative correspondent à des particules dont les trajets sont parallèles à l'axe de mesure XX et les valeurs minimum à des particules dont les trajets sont pratiquement perpendiculaires à l'axe XX. Une telle réalisation est représentée sur la figure 5.

Le dispositif selon la figure 5 ne diffère de l'anémomètre selon les figures 1 et 2 que par l'adjonction d'un plateau tournant 30 entraîné par un moteur 31 et couplé à un capteur angulaire 32 destiné à fournir un signal de référence de phase pour permettre de traiter le signal fourni par le photodétecteur 8. Le plateau tournant supporte le séparateur de faisceaux 3 et l'entraîne en rotation autour de l'axe ZZ. Dans le cas où le moteur entraîne le séparateur en oscillations, les oscillations peuvent être pendulaires, c'est-à-dire être progressives comme un pendule d'horloge ou peuvent se faire brusquement avec arrêts de durée prédéterminée sur les deux positions extrêmes ; dans ce dernier cas les mesures ne sont effectuées que pendant les arrêts. Dans le cas de rotations complètes ou d'oscillations progressives les mesures sont effectuées avec le séparateur en mouvement.

Les figures 6 et 7 correspondent à un autre dispositif de mesure embarqué, pour l'obtention de signaux représentatifs de la vitesse relative, par rapport à l'air, d'un avion. Ce dispositif est constitué par un anémomètre double qui se distingue de celui selon les figures 1 et 2 par un séparateur de faisceaux 3' à quatre faisceaux de sortie A, B, A', B', par deux volumes de mesure, M et M', par deux iris 7 et 7' et par deux photodétecteurs 8 et 8'. Les quatre faisceaux sont représentés, sur la figure 7, dans le plan de sortie du séparateur 3 ; cette figure montre que, dans le plan de sortie du séparateur 3, la paire de faisceaux A'B' est décalée de 90° par rapport à la paire AB et que, de plus, son milieu est décalé vers le bas par rapport au milieu de la paire AB, ce qui fait que les volumes de mesure M et M' correspondant respectivement aux faisceaux AB et A'B' sont distincts et que de la lumière provenant de ces volumes de mesure peut être focalisée sur les deux photodétecteurs voisins sans qu'il y ait d'interférence entre les rayonnements provenant des deux volumes de mesure M et M'. Il est à noter que, compte tenu de la position des faisceaux A'B' à 90 degrés de celle des faisceaux AB, les axes de mesure, non représentés sur la figure 6 mais correspondant à l'axe XX de la figure 1, sont vertical comme dans la figure 1 pour le volume M et perpendiculaire au plan de la figure pour le volume M'. Le dispositif selon les figures 6 et 7 a été réalisé avec un angle de 90 degrés entre les deux axes de mesure. Dans le cas où le débattement maximum du vecteur vitesse relative est inférieur à 90 degrés, cet angle entre les axes de mesure peut être réduit jusqu'à la valeur de ce débattement maximum à condition toutefois, comme c'est d'ailleurs le cas pour les autres dispositifs, que l'axe longitudinal de l'avion soit parallèle à la bissectrice de cet angle. Il est à noter que les photodétecteurs 8,8' qui sont séparés sur la figure 6 sont, en fait, dans la réalisation qui a servi d'exemple, portés par un même support.

La présente invention n'est pas limitée aux exemples décrit ci-dessous ; elle s'applique en particulier au cas où les coordonnées du vecteur vitesse sont recherchées non plus dans un plan mais dans l'espace, ce qui nécessite au moins trois anémomètres dans le cas où les axes de mesure sont fixes et au moins deux anémomètres dans le cas où ils sont tournants ou oscillants dans le cas de trois axes de mesure fixes, le dispositif pourra être constitué, par exemple, des dispositifs selon les figures 4 ou 6 et 7 associés à un anémomètre selon les figures 1 et 2 avec les volumes de mesure proches les uns des autres et, par exemple, un angle de 90 degrés entre ces deux ensembles. Il est également possible d'associer, par exemple, un anémomètre selon les figures 1 et 2 à un dispositif selon la figure 5 avec, par exemple, un angle de 90 degrés entre eux et avec leurs volumes de mesure proches l'un de l'autre.

De même la constitution de dispositifs selon l'invention peut être différente de celle des dispositifs ci-avant décrits ; c'est ainsi que le ou les séparateurs de faisceaux qui, dans les réalisations dont il a été question, étaient faits de miroirs, peuvent également être faits à l'aide de fibres optiques.

Il est également possible de ne pas utiliser d'iris et de disposer les filtres de lumière entre les optiques d'émission et les optiques de réception.

Associé à un circuit électronique de traitement des signaux fournis par son ou ses photodétecteurs, le dispositif selon l'invention constitue un appareil de mesure de la vitesse relative de l'engin dans lequel il est embarqué.

## Revendications

1. Dispositif embarqué dans un engin mobile pour l'obtention de signaux représentatifs de la vitesse relative de l'engin par rapport à un fluide ambiant, caractérisé en ce qu'il comporte n, où n est un entier positif, anémomètres à diode laser (1), à franges, en ce que chaque anémomètre comporte un filtre optique (6) dont la bande passante est centrée sur la fréquence d'émission de la diode laser (1), en ce que ce filtre est disposé dans le trajet optique entre le volume de mesure (M, M1, M2,M') de l'anémomètre considéré et son photodétecteur (8, 8') et en ce que les signaux sont fournis par les photodétecteurs des n anémomètres, pour au moins deux directions distinctes (X1X1, X2X2) des n axes de mesure relatifs aux n anémomètres, dans le but de déterminer au moins deux composantes de la vitesse.

2. Dispositif selon la revendication 1, caractérisé en ce qu'il comporte deux anémomètres dont les volumes de mesure respectifs (M1, M2) sont proches l'un de l'autre et dont les axes de mesure respectifs (X1X1, X2X2) font un angle.

3. Dispositif selon la revendication 1, caractérisé en ce qu'il comporte un anémomètre avec un séparateur de faisceaux (3) monté sur un support rotatif (30) de manière que le volume de mesure (M) tourne sur lui-même.

4. Dispositif selon la revendication 3, caractérisé en ce que le support rotatif (30) entraîne le séparateur (3) en un mouvement continu de rotation.

5. Dispositif selon la revendication 3, caractérisé en ce que le support rotatif (30) entraîne le séparateur (3) dans un mouvement oscillatoire.

6. Dispositif selon la revendication 5, caractérisé en ce que le mouvement oscillatoire est de type pendulaire.

7. Dispositif selon la revendication 5, caractérisé en ce que le mouvement oscillatoire se fait avec passage brusque entre deux positions extrêmes et arrêts de valeur prédéterminée sur chaque position extrême.

8. Dispositif selon la revendication 1, dans lequel n est au moins égal à 2, caractérisé en ce que deux des n anémomètres forment un anémomètre double avec diode laser (1) commune suivi optiquement d'un séparateur de faisceaux (3') à quatre faisceaux de sortie et de deux photodétecteurs distincts (8, 8').

9. Dispositif selon l'une quelconque des revendications précédentes, caractérisé en ce que les anémomètres comportent un iris (7, 7') disposé dans le trajet optique entre leur volume de mesure (M, M') et leur photodétecteur (8, 8').

10. Appareil de mesure de la vitesse relative d'un engin mobile, caractérisé en ce qu'il comporte un dispositif selon l'une des revendications précédentes.

## Patentansprüche

1. In einem beweglichen Gerät untergebrachte Vorrichtung zur Erzielung von Signalen, die die Geschwindigkeit des Geräts relativ zu einem Umgebungsfluid repräsentieren, dadurch gekennzeichnet, daß sie n Interferenzstreifen-Anemometer mit Laser-Dioden (1) enthält, wobei n eine ganze positive Zahl ist, daß jedes Anemometer ein optisches Filter (6) aufweist, dessen Durchlaßband auf die Sendefrequenz der Laser-Diode (1) zentriert ist, daß dieses Filter in der optischen Bahn zwischen dem Meßvolumen (M, M1, M2, M') des betrachteten Anemometers und seinem Photodetektor (8, 8') angeordnet ist und daß diese Signale von den Photodetektoren der n Anemometer für wenigstens zwei bestimmte Richtungen (X1X1, X2X2) von n Meßachsen bezüglich n Anemometern mit dem Ziel geliefert werden, wenigstens zwei Geschwindigkeitskomponenten zu bestimmen.

2. Vorrichtung nach Anspruch 1, dadurch gekennzeichnet, daß sie zwei Anemometer enthält, deren jeweilige Meßvolumen (M1, M2) nahe beieinanderliegen und deren jeweilige Meßachsen (X1X1, X2X2) einen Winkel bilden.

3. Vorrichtung nach Anspruch 1, dadurch gekennzeichnet, daß sie ein Anemometer mit einem Strahlenbündelteiler (3) enthält, der auf einem rotierenden Träger (30) so angebracht ist, daß sich das Meßvolumen (M) um sich selbst dreht.

4. Vorrichtung nach Anspruch 3, dadurch gekennzeichnet, daß der rotierende Träger (30) den Teiler (3) in einer kontinuierlichen Drehbewegung antreibt.

5. Vorrichtung nach Anspruch 3, dadurch gekennzeichnet, daß der rotierende Träger (30) den Teiler (3) in einer oszillierenden bewegung antreibt.

6. Vorrichtung nach Anspruch 5, dadurch gekennzeichnet, daß die oszillierende bewegung pendelartig ist.

7. Vorrichtung nach Anspruch 5, dadurch gekennzeichnet, daß die oszillierende bewegung mit einem plötzlichen Durchgang zwischen zwei Extrempositionen und mit Aufenthalt mit vorbestimmter Dauer an jeder Extremposition erfolgt.

8. Vorrichtung nach Anspruch 1, bei welcher n den Wert 2 hat, dadurch gekennzeichnet, daß zwei der n Anemometer ein Doppel-Anemometer mit einer gemeinsamen Laser-Diode (1) bilden, auf die optisch ein Strahlungsbündelteiler (3') mit vier Ausgangsstrahlenbündeln und zwei getrennte Photodetektoren (8, 8') folgen.

9. Vorrichtung nach einem der vorhergehenden Ansprüche, dadurch gekennzeichnet, daß die Anemometer eine Blende (7, 7') enthalten, die in der optischen Bahn zwischen dem Meßvolumen (M, M') und ihren Photodetektoren (8, 8') liegt.

10. Apparat zum Messen der Relativgeschwindigkeit eines beweglichen Geräts, dadurch gekennzeichnet, daß es eine Vorrichtung nach einem der vorhergehenden Ansprüche aufweist.

## Claims

1. Device aboard a mobile craft for obtaining signals representative of the relative velocity of the craft with respect to an ambient fluid, characterised in that it includes n, where n is a positive integer, fringe-effect laser diode (1) anemometers, in that each anemometer includes an optical filter (6) whose pass band is centred on the emission frequency of the laser diode (1), in that this filter is arranged in the optical path between the measurement volume (M, M1, M2, M') of the relevant anemometer and its photodetector (8, 8') and in that the signals are provided by the photodetectors of the n anemometers, for at least two distinct directions (X1X1, X2X2) of the n measurement axes relating to the n anemometers, for the purpose of determining at least two components of the velocity.

2. Device according to Claim 1, characterised in that it includes two anemometers whose respective measurement volumes (M1, M2) are close to one another and whose respective measurement axes (X1X1, X2X2) make an angle.

3. Device according to Claim 1, characterised in that it includes an anemometer with a beam splitter (3) mounted on a rotary support (30) in such a way that the measurement volume (M) revolves on itself.

4. Device according to Claim 3, characterised in that the rotary support (30) drives the splitter (3) in a continuous rotational motion.

5. Device according to Claim 3, characterised in that the rotary support (30) drives the splitter (3) in an oscillatory motion.

6. Device according to Claim 5, characterised in that the oscillatory motion is of pendular type.

7. Device according to Claim 5, characterised in that the oscillatory motion takes place with abrupt passage between two extreme positions and stoppages of predetermined value in each extreme position.

8. Device according to Claim 1, in which n is at least equal to 2, characterised in that two of the n anemometers form a double anemometer with common laser diode (1), followed optically by a beam splitter (3') with four exit beams and by two distinct photodetectors (8, 8').

9. Device according to any one of the preceding claims, characterised in that the anemometers include an iris (7, 7') arranged in the optical path between their measurement volume (M, M') and their photodetector (8, 8').

10. Apparatus for measuring the relative velocity of a mobile craft, characterised in that it includes a device according to one of the preceding claims.
